# EUROPEAN PATENT APPLICATION

(11) **EP 2 527 999 A1**
(43) Date of publication of application: **28.11.2012**
(21) Application number: 12161842.5
(22) Date of filing: 28.03.2012
(51) Int. Cl.: G06F 17/30, H04L 29/08

(54) **Method and apparatus for splitting media files**

(30) Priority: 17.05.2011 KR 20110046247
(71) Applicant: Samsung Electronics Co., Ltd., Suwon-si, Gyeonggi-do, 443-742 (KR)
(72) Inventor: Lee, Kyong Ryol, Gyeonggi-do (KR)
(74) Representative: Jenkins, Richard Gavin

(57) **Abstract**

A method and an apparatus for splitting media files are provided. The method and apparatus enable a mobile device to automatically segment a media file into split files. The mobile device may download a large media file whose size exceeds the file size limit imposed by the file system. The method includes detecting a download event for a specified file, comparing the size of an event related file corresponding to the specified file for which a download event occurs with a file size limit imposed by a file system of a mobile device, identifying, when the size of the event related file is greater than or equal to the file size limit, a type of the event related file, splitting, when the event related file is a media file, the event related file on the basis of the file size limit, and storing the split files according to setting information.

## Description

### BACKGROUND OF THE INVENTION

### 1. Field of the Invention:

The present invention relates to a method and apparatus for media file splitting. More particularly, the present invention relates to a method and apparatus that enable a mobile device to automatically segment a large media file into split files of a given size and to play back the split files in succession.

### 2. Description of the Related Art:

Recent advances in digital technologies have enabled popularization of various mobile devices including mobile communication terminals, personal digital assistants, electronic organizers, smartphones, tablet computers, and the like. Users carrying such mobile devices may process personal information while in motion. With rapid technological advances, the mobile devices may support not only regular communication functions related to voice calls and short text messages but also other advanced functions related to video calls, electronic scheduling, document handling, electronic mail and Internet access.

The mobile devices have continuously evolved according to technical advances and changed user requirements. In particular, with regard to advanced internal and external storage media, high-end mobile devices may store and play back large and high-resolution media files. In contrast, only modest improvements have been made in file systems for the mobile devices.

In other words, although a mobile device has a sufficient capability of storing and playing back a large high-resolution media file, it may have difficulty in playback of a large high-resolution media file due to file size limitations of the file system.

For example, a mobile device may play back an already stored large high-resolution media file. However, when the user desires to store a large high-resolution media file obtained from an external device or web server, the mobile device may not be able to directly store the large high-resolution media file due to file size limitations of the file system. Currently, a mobile device may not be able to directly download a large high-resolution media file from a web server and store the same. Hence, the user may have to download a large high-resolution media file to a separate external device such as a desktop computer or laptop computer, reduce the size of the downloaded media file, and transfer the reduced media file from the external device to the mobile device.

That is, the user may split the large high-resolution media file or transform the same through encoding in the external device and then copy or transfer the split files or the transformed file to the mobile device through a manual process. However, to transfer the split files from the external device to the mobile device, the user has to be aware of the file size allowed in the file system of the mobile device and split the large media file accordingly. In addition, encoding of a media file may require a long time, and it is difficult to estimate the size of the encoded media file. When the size of the media file after encoding exceeds the file size limit imposed by the file system of the mobile device, the encoding process itself becomes useless.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method and apparatus for splitting media files that enable a mobile device to obtain a large and high-resolution media file from an external device and store the obtained media file.

Another aspect of the present invention is to provide a media file splitting method and apparatus that enable a mobile device to obtain a media file by splitting the media file in consideration of the file size limit of the file system.

Another aspect of the present invention is to provide a method and apparatus that realize a media file splitting function that may contribute to enhancement of user convenience, usability, and competitiveness of a mobile device.

In accordance with an aspect of the present invention, a method for splitting media files is provided. The method includes detecting a download event for a specified file, comparing the size of an event related file corresponding to the specified file for which a download event occurs with a file size limit imposed by a file system of a mobile device, identifying, when the size of the event related file is greater than or equal to the file size limit, a type of the event related file, splitting, when the event related file is a media file, the event related file on the basis of the file size limit, and storing the split files according to setting information.

In accordance with another aspect of the present invention, computer readable storage media that contain computer programs implementing the media file splitting method is provided.

In accordance with another aspect of the present invention, an apparatus for splitting media files is provided. The apparatus includes a communication module for connecting to an external server through a network and for receiving a media file downloaded from the external server, an interface unit for supporting transmission and reception of a media file to and from an external device, a display unit for displaying screens related to states and operations of the apparatus, a storage unit for storing media files and setting information for a file split function, and a control unit for controlling a process of automatically splitting a media file on the basis of a file size limit imposed by a file system and storing the split files according to the setting information.

In accordance with another exemplary embodiment of the present invention, a system for splitting media files is provided. The system includes a network, a server storing at least one media file, a mobile terminal connected to the media server through the network, the mobile terminal comprising a storage unit, wherein if at least one of the server and the mobile terminal receives instructions to download one of the at least one media file to the mobile terminal, then at least one of the server and the mobile terminal automatically splits the media file into a plurality of split files on the basis of a file size limit, and the mobile terminal stores the plurality of split files on the storage unit.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments the present invention will be more apparent from the following description taken in conjunction with the accompanying drawings, in which:

FIG. 1 illustrates a configuration of a system in which a media file splitting function is utilized according to an exemplary embodiment of the present invention;

FIG. 2 is a block diagram of a mobile device according to an exemplary embodiment of the present invention;

FIG. 3 is a flowchart of a media file splitting method according to an exemplary embodiment of the present invention;

FIG. 4 illustrates operation of media file splitting according to an exemplary embodiment of the present invention; and

FIG. 5 is a flowchart of a procedure for storing a media file in a mobile device via file splitting according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention relate to a method and apparatus that enables a mobile device to store and play back a large media file without file size limitations. For example, in an exemplary embodiment, an automatic file splitting function is provided that automatically splits, when the mobile device downloads a large media file from an external web server or an external device like a personal computer, the large media file in consideration of the file size limit imposed by the file system supported by the mobile device. Hence, the mobile device may download a large media file exceeding the file size limit imposed by the file system.

In the description, the "file system" refers to, for example, an internal system that is associated with a storage unit of the mobile device and that controls operations to read files from, write files to, and locate files in the storage unit. That is, the file system enables a mobile device to manage files through assignment of file names, and storage and locating of files in a storage unit. In general, a specific file system imposes limitations on, for example, the length of a file name and the size of a single file. According to an exemplary embodiment of the present invention, a media file may refer to a still image file, a moving image file, a music file, or the like.

The media file splitting method according to an exemplary embodiment of the present invention enables a mobile device wishing to download a large media file to automatically segment the large media file into multiple split files of a size less than or equal to the file size limit of the file system and to store the split files in a linked form. The media file splitting function may be executed in a mobile device when the mobile device downloads a media file from a web server or an external device, or may be executed in an external device when the external device copies or moves a media file to a mobile device.

Next, a description is given of the configuration and operation of a mobile device with reference to the drawings. However, the configuration and operation thereof are not limited to or by the following description, and various changes and modifications are possible on the basis of the following description.

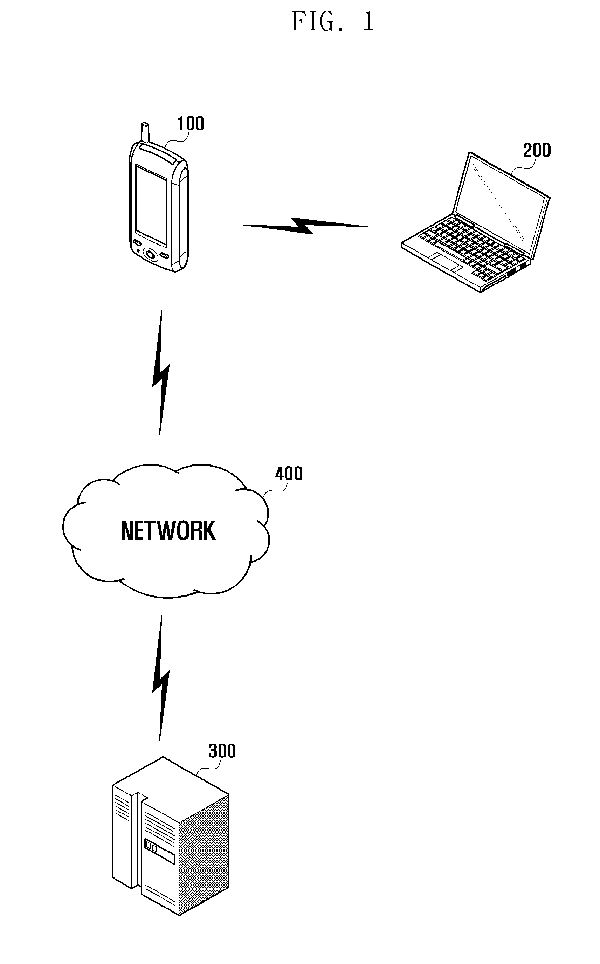

FIG. 1 illustrates a system configuration in which a media file splitting function is utilized according to an exemplary embodiment of the present invention.

Referring to FIG. 1, the system employing a media file splitting function includes a mobile device 100, an external device 200, an external server 300, and a network 400.

The mobile device 100 may be any information and communication appliance or multimedia appliance capable of managing files using a file system of a specific operating system, such as a mobile communication terminal based on communication protocols supporting various communication systems, a tablet computer, a smartphone, a Portable Multimedia Player (PMP), a media player, or a Personal Digital Assistant (PDA).

In particular, when the mobile device 100 downloads a media file from the external device 200 or the external server 300, the mobile device 100 may automatically split the media file according to the file size limit set by the supported file system and store the split files. That is, the mobile device 100 may compare the size of the media file to be downloaded with the file size limit of the file system. If the size of the media file exceeds the file size limit, then the mobile device 100 may divide the media file into multiple split files of a size not exceeding the file size limit and store the multiple split files. Alternatively, the mobile device 100 may receive split files in succession from the external device 200 and store the split files. The mobile device 100 may be connected with the external device 200 through a wired interface or a wireless interface.

To transmit a media file to the mobile device 100, the external device 200 may identify the file system supported by the mobile device 100 connected through a wired interface or a wireless interface, segment the media file into split files on the basis of the file size limit of the identified file system, and transmit the split files to the mobile device 100. As described above, the external device 200 may be a mobile device, a desktop computer, a laptop computer, or the like.

To copy or move a stored media file to the mobile device 100, the external device 200 may identify the file size limit imposed by the file system of the mobile device 100, segment the media file into split files according to the identified file size limit, and transmit the split files in sequence. Here, by checking the file system of the mobile device 100 when a wired or wireless connection thereto is established, the external device 200 may be aware of the file size limit in advance.

The external server 300 may be a web server that stores various media files including moving image files, still image files, audio files, and the like. The external server 300 may be connected with the mobile device 100 through the network 400. In response to a download request for a media file from the mobile device 100, the external server 300 may send the requested media file to the mobile device 100 through the network 400.

The network 400 serves as a medium connecting the mobile device 100 to the external server 300. The network 400 may be an Internet Protocol (IP) network, a mobile communication network, or the like. That is, the network 400 specifies a standard procedure through which the mobile device 100 connects to the external server 300 and downloads a media file therefrom.

According to an exemplary embodiment of the present invention, as described above, the media file splitting function may be performed by one of the mobile device 100 and the external device 200. For example, when a large media file is downloaded from the external device 200 or the external server 300, the mobile device 100 may split the large media file according to the file size limit of the file system. Alternatively, when a large media file is scheduled to be copied or moved to the mobile device 100, the external device 200 may split the large media file according to the file size limit of the mobile device 100 and then copy or move the split files. In addition, according to another exemplary embodiment of the present invention, the media file splitting function may also be performed by the external server 300. Considering user convenience, it may be preferred that the media file splitting function be performed by the mobile device 100. In the following description, the media file splitting function is assumed to be performed by the mobile device 100.

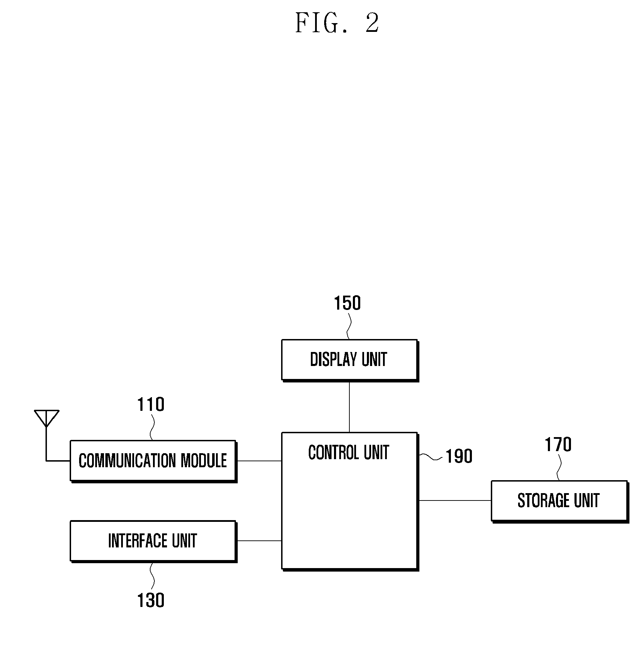

FIG. 2 is a block diagram of a mobile device according to an exemplary embodiment of the present invention.

Referring to FIG. 2, mobile device 100 includes a communication module 110, an interface unit 130, a display unit 150, a storage unit 170, and a control unit 190. Although not shown, the mobile device 100 may further include various components, such as an audio processing unit including a microphone and a speaker, a digital broadcast receiving module for Digital Multimedia Broadcasting (DMB) or Digital Video Broadcasting (DVB), a camera module for capturing still and moving images of a target object, a short-range communication module based on Bluetooth, Infrared Data Association (IrDA), Radio Frequency Identification (RFID) or Near Field Communication (NFC), a touch pad and/or touchscreen for entering touch-based inputs, an input unit for physical key input, a radio frequency unit for mobile communication, and a battery unit for power supply. These additional components are not described further.

The communication module 110 supports reception of mobile communication services based on a mobile communication network or Internet (or Wi-Fi) services based on a Wireless Local Area Network (WLAN). The communication module 110 may establish a communication channel to the network 400, and send and receive data through the communication channel. In particular, the communication module 110 may connect to the external server 300 (such as a web server) through the network 400 (e.g., an IP network, a mobile communication network, or the like) and receive a requested media file from the external server 300.

The interface unit 130 is used to establish a wired or wireless connection with the external device 200 (e.g., such as a laptop computer, a desktop computer, or the like) for transmission and reception of a media file. When the mobile device 100 is connected to the external device 200 through a wireless link, the interface unit 130 may be a short-range communication module. When the mobile device 100 is connected to the external device 200 through a wired link, the interface unit 130 may be a connector.

The display unit 150 may display screens related to states and operations of the mobile device 100. For example, the display unit 150 displays the home screen and application handling screens of the mobile device 100. Application handling screens may be related to communication, playback of media files (such as audio files, moving image files and still image files), games, and file segmentation. The display unit 150 may be realized using Liquid Crystal Display (LCD) devices, Light Emitting Diodes (LED), Organic LEDs (OLED), Active Matrix OLEDs (AMOLED), or the like. The display unit 150 may have a touch-based input interface. For example, the display unit 150 may have a touchscreen capability to support touch-based user interaction, and may generate an input signal corresponding to a user interaction and send the input signal to the control unit 190.

The storage unit 170 stores various programs and associated data related to operation of the mobile device 100. The storage unit 170 may be composed of one or more volatile memories (such as a random access memory) or nonvolatile memories (such as a read only memory or flash memory). The storage unit 170 may temporarily or permanently store the operating system of the mobile device 100, programs and data related to display control operation for the display unit 150, programs and data related to input control operation using the display unit 150, and programs and data related to the file splitting function of the mobile device 100.

The storage unit 170 may store music files, moving image files, still image files, and document files. In particular, moving image files may be classified into split moving image files (each of which is a piece of a moving image file), and merged moving image files (each of which is a whole moving image file obtained by merging split moving image files). The storage unit 170 may store various setting information for the media file splitting function. The setting information may indicate whether to store the split files in a linked form.

The control unit 190 controls the overall operation of the mobile device 100. In particular, the control unit 190 may control operations related to the media file splitting function. For example, in response to an event related to the file splitting function (for example, request for downloading or copying a media file), the control unit 190 may compare the size of the media file related to the event with the file size limit of the file system. If the size of the media file exceeds the file size limit, the control unit 190 may initiate the file splitting function so as to divide the media file into multiple split files each of which has a size not exceeding the file size limit. Here, the media file may be segmented at frame boundaries. That is, the control unit 190 may divide the media file into multiple split files of a size not exceeding the file size limit so that frames of the media file are not segmented.

In addition, for each split file, the control unit 190 may creates a header containing playback information such as an identifier indicating the source media file, the sequence number of the split file in the source media file, and the play start point of the split file. As an example, the control unit 190 may examine the setting information to determine whether to link the split files together. According to the determination result, the control unit 190 may store the split files separately or store the split files in a linked form. Thereafter, the control unit 190 may play back the split files separately in sequence or play back the liked split files as a singe entity.

Control operations of the control unit 190 are described in more detail with reference to the drawings. In addition, the control unit 190 may control various regular operations of the mobile device 100. For example, when an application is activated, the control unit 190 may control execution and data display of the application. The control unit 190 may receive various input signals generated by the touch-based input interface and control operations according to the input signals. The control unit 190 may control transmission and reception of various data during wired or wireless communication.

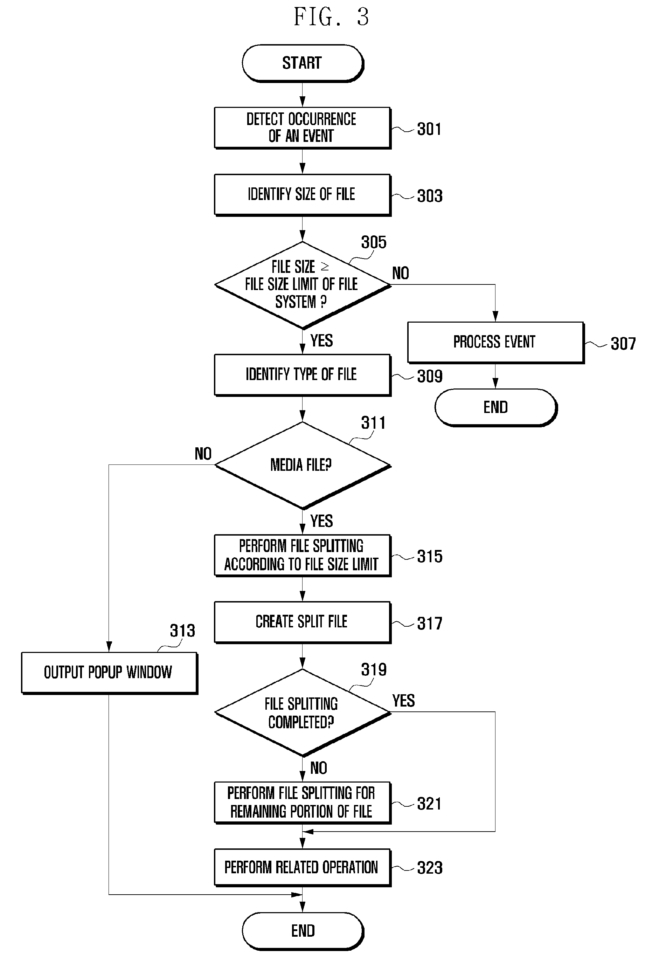

FIG. 3 is a flowchart of a media file splitting method according to an exemplary embodiment of the present invention. Here, the method may be performed by the mobile device 100 or the external device 200. In the following description, the method is assumed to be performed by the mobile device 100.

Referring to FIG. 3, the control unit 190 of the mobile device 100 detects occurrence of an event at step 301. For example, the event is assumed to be related to downloading of a specific file from the external device 200 or the external server 300 to the mobile device 100. The event may also be related to a case in which the external device 200 copies or moves a specific file to the mobile device 100.

Upon detection of an event, the control unit 190 identifies the size of the file related to the event at step 303, and determines whether the size of the event related file is greater than or equal to the file size limit imposed by the file system at step 305.

If the size of the event related file is less than the file size limit, then the control unit 190 may process the event at step 307. For example, the control unit 190 may download the event related file from the corresponding device (for example, the external device 200 or the external server 300) and store the downloaded file in the storage unit 170.

If the size of the event related file is greater than or equal to the file size limit, then the control unit 190 identifies the type of the event related file at step 309, and determines whether the event related file is a media file at step 311. Here, the control unit 190 may determine whether the event related file is a media file such as a still image file, moving image file or music file, or whether the file is an ordinary file such as a document file.

If the event related file is not a media file, then the control unit 190 may output a popup window at step 313. For example, if the event related file is an ordinary file, then the control unit 190 may output a popup window notifying failure of event handling. Here, the popup window may display a preset error or guide phrase such as "Download failure", "Download failure - file size limit exceeded" or "Download is possible only after splitting media file".

If the event related file is a media file, then the control unit 190 performs media file splitting according to the file size limit of the file system at step 315. For example, the control unit 190 may form a split section by extracting a number of consecutive frames corresponding to the file size limit from the event related file. Initially, the split section is formed from the beginning of the event related file.

The control unit 190 creates a split file on the basis of the split section at step 317. In this step, for example, the control unit 190 may add playback information, including a source file identifier (e.g., indicating the event related file), the sequence number of the split file in the source media file, and the play start point of the split file, to the header of the split file.

Thereafter, the control unit 190 determines whether splitting of the event related file is completed at step 319. Here, the control unit 190 may determine whether all frames of the event related file have been processed.

If splitting of the event related file is completed, then the control unit 190 proceeds to step 323. If splitting of the event related file is not completed, then the control unit 190 performs file splitting for the remaining portion of the event related file at step 321 and then proceeds to step 323. At step 321, a next split section is formed according to the file size limit, a next split file is created on the basis of the next split section, and playback information is added to the header of the next split file. This process may be repeated until all frames of the event related file are processed. As to playback information, the source file identifiers are the same for all the split files; the sequence number of a next split file is one more than that of a previous split file; and the play start point of each split file corresponds to the first frame of the split file.

After completion of file splitting, the control unit 190 may perform an operation related to the split files at step 323. For example, the control unit 190 may store the individual split files separately, or may store the split files in a linked form after linking the split files together. How to store the split files may be determined according to setting information. This is described later with reference to the drawings.

Although not shown in FIG. 3, if the media file splitting method is performed by the external device 200, the external device 200 may conduct a step of sending a created split file in sequence to the mobile device 100, and skip a step of merging split files.

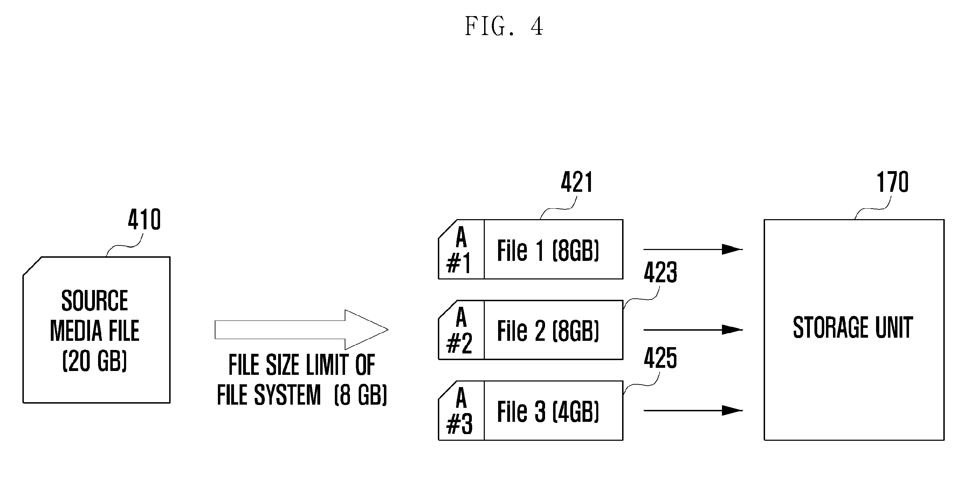

FIG. 4 illustrates operation of media file splitting according to an exemplary embodiment of the present invention. In the flowing description, it is assumed that media file splitting is performed by the mobile device 100. Media file splitting may also be performed by the external device 200 in a similar way.

In FIG. 4, it is assumed that the size of a source media file 410 is 20 Gigabyte (GB) and the file size limit imposed by the file system of the mobile device 100 is 8 GB.

Referring to FIG. 4, because the file size limit is 8 GB, one split file may have a maximum size of 8 GB. Because 20 GB = 8GB + 8GB + 4GB, the source media file 410 may be cut into three split files ("File 1" 421, "File 2" 423, and "File 3" 425). As described above, the split files 421, 423 and 425 may have the same source file identifier (for example, 'A'), and consecutive sequence numbers (for example, #1, #2, #3) at their headers.

Thereafter, the split files 421, 423 and 425 may be stored in the storage unit 170. As an example, the split files 421, 423 and 425 may be stored separately, or the split files 421, 423, and 425 may be stored in a linked form such that the split files can be used as a single file.

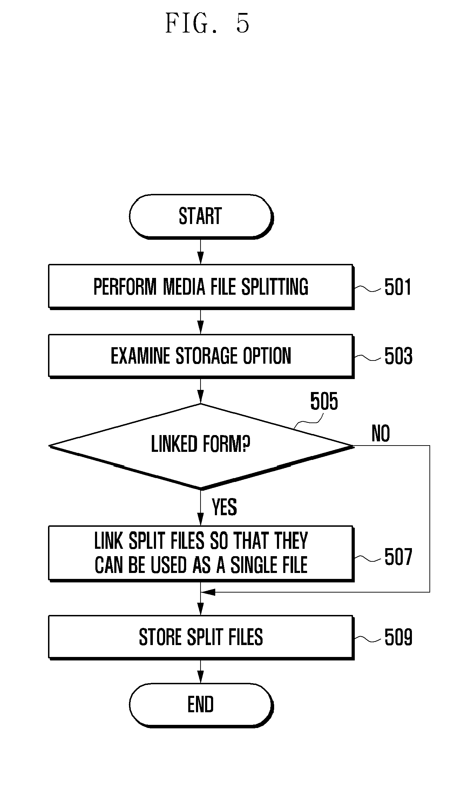

FIG. 5 is a flowchart of a procedure for storing split media files in the mobile device 100 according to an exemplary embodiment of the present invention.

Referring to FIG. 5, the control unit 190 performs a file splitting function on a given media file as described in connection with FIGS. 3 and 4 at step 501. After splitting the media file, the control unit 190 identifies the storage option for the split files at step 503 and determines whether the storage option indicates a linked form at step 505. For example, the control unit 190 may examine setting information to determine whether to store the split files separately or in a linked form.

If the storage option does not indicate a linked form, then the control unit 190 stores the individual split files separately in the storage unit 170 at step 509.

If the storage option indicates a linked form, then the control unit 190 links the split files at step 507, and stores the split files in a linked form in the storage unit 170 at step 509. For example, the split files are linked so the source media file may be reconstructed, and the linked split files may be used or played back as a single file. In this process, headers of the split files may be adjusted. For example, the header of one split file may have a pointer pointing to the next split file.

Although not described in the above description, the media file splitting method may further include a step of comparing the size of a source media file with the remaining capacity of the storage unit 170 before or after identifying the file size limit of the file system. If the size of the source media file exceeds the remaining capacity of the storage unit 170, then the control unit 190 may terminate downloading, copying or moving of the source media file and output a popup window. If the size of the source media file does not exceed the remaining capacity, then the control unit 190 may complete downloading, copying or moving of the source media file and may perform the file splitting function. Hence, the control unit 190 may prevent an error due to lack of storage space during file segmentation.

According to an exemplary embodiment of the present invention, the media file splitting method and apparatus enable a mobile device to obtain a large media file exceeding the file size limit of the file system by automatically segmenting the media file in consideration of the file size limit.

Exemplary embodiments of the present invention enable a user to store a large media file in a mobile device without a separate encoding process or a manual file segmentation process. Moreover, this media file splitting function may be supported by all types of mobile devices and other kinds of devices. Hence, the media file splitting function according to exemplary embodiments of the present invention enables a mobile device to obtain a large media file in an easy and simple way, contributing to enhancement of user convenience, usability, and competitiveness of the mobile device.

According to exemplary embodiments of the present invention, the media file splitting method may be implemented as computer programs and may be stored in various computer readable storage media. The computer readable storage media may store program instructions, data files, data structures and combinations thereof. The program instructions may include instructions developed specifically for an exemplary embodiment of the present invention and existing general-purpose instructions.

The computer readable storage media may include magnetic media such as a hard disk and floppy disk, optical media such as a CD-ROM and DVD, magnetooptical media such as a floptical disk, and memory devices such as a ROM and RAM. The program instructions may include machine codes produced by compilers and high-level language codes executable through interpreters.

The description of the various embodiments is to be construed as exemplary only and does not describe every possible instance of the invention. Therefore, it should be understood that various changes may be made and equivalents may be substituted for elements of the invention.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for splitting media files, the method comprising:
detecting a download event for a specified file;
comparing the size of an event related file corresponding to the specified file for which the download event occurs with a file size limit imposed by a file system of a mobile device;
identifying, when the size of the event related file is greater than or equal to the file size limit, a type of the event related file;
splitting, when the event related file is a media file, the event related file on the basis of the file size limit; and
storing the split files according to setting information.

2. The method of claim 1, wherein the splitting of the event related file comprises:
forming a split section by extracting a number of consecutive frames corresponding to the file size limit from the event related file, wherein the split section starts from the beginning of the event related file; and
creating a split file containing frames in the split section.

3. The method of claim 2, wherein the creating of a split file comprises adding playback information to the split file.

4. The method of claim 3, wherein the adding of playback information to the split file comprises assigning at least one of a source file identifier indicating a source media file, a sequence number of the split file in the source media file, and a play start point of the split file to a header of the split file.

5. The method of claim 3, further comprising determining whether splitting of the event related file is completed.

6. The method of claim 5, wherein the determining of whether the splitting of the event related file is completed comprises:
determining whether all frames of the event related file have been processed; and
splitting, when splitting of the event related file is not completed, the remaining portion of the event related file.

7. The method of claim 6, wherein the splitting of the remaining portion of the event related file comprises:
forming a next split section by extracting a number of consecutive frames corresponding to the file size limit from the event related file, wherein the next split section starts from the end of a corresponding previous split section; and
creating a next split file containing frames in the next split section.

8. The method of claim 7, wherein the splitting of the remaining portion of the event related file further comprises adding playback information to the next split file.

9. The method of claim 8, wherein in the playback information, the source file identifiers are identical for all associated split files, the sequence number of a next split file is one more than that of a previous split file, and the play start point of each split file corresponds to the first frame of the split file.

10. The method of claim 1, wherein the storing of the split files comprises one of storing the split files separately and storing the split files in a linked form after linking the split files.

11. The method of claim 1, further comprising comparing the size of the event related file with the remaining capacity of a storage unit.

12. An apparatus for splitting media files, the apparatus comprising:
a communication module for connecting to an external server through a network and for receiving a media file downloaded from the external server;
an interface unit for supporting transmission and reception of a media file to and from an external device;
a display unit for displaying screens related to states and operations of the apparatus;
a storage unit for storing media files and setting information for a file split function; and
a control unit for controlling a process of automatically splitting a media file on the basis of a file size limit imposed by a file system and storing the split files according to the setting information.

13. The apparatus of claim 12, wherein the control unit determines whether to split the media file by comparing a size of the media file with the file size limit, and splits, when the size of the media file exceeds the file size limit, the media file to create split files in sequence according to the file size limit.

14. The apparatus of claim 13, wherein the control unit adds playback information to the header of each split file by assigning at least one of a source file identifier indicating a source media file, a sequence number of the split file in the source media file, and a play start point of the split file.

15. The apparatus of claim 14, wherein the control unit splits the media file in consideration of frames so as not to segment frames of the media file, and stores the split files separately or in a linked form according to the setting information.
